(19) **Europäisches Patentamt**

**European Patent Office**

**Office européen des brevets**

(11) **EP 1 464 959 B1**

(12) **EUROPEAN PATENT SPECIFICATION**

(45) Date of publication and mention
of the grant of the patent:
**12.07.2006 Bulletin 2006/28**

(51) Int Cl.:
***G01N 29/11*** *(2006.01)* ***G01V 1/50*** *(2006.01)*

(21) Application number: **03290833.7**

(22) Date of filing: **03.04.2003**

(54) **Acoustic method for cement bond evaluation in boreholes**

Akustisches Verfahren zur Bestimmung der Zementverbindung in Bohrlöchern

Procédé acoustique d'évaluation d'adhesivité du ciment dans des puits de forage

(84) Designated Contracting States:
**AT BE BG CH CY CZ DE DK EE ES FI FR GB GR
HU IE IT LI LU MC NL PT RO SE SI SK TR**

(43) Date of publication of application:
**06.10.2004 Bulletin 2004/41**

(73) Proprietors:
• **SERVICES PETROLIERS SCHLUMBERGER
75007 Paris (FR)**
Designated Contracting States:
**FR**
• **SCHLUMBERGER TECHNOLOGY B.V.
2514 JG Den Haag (NL)**
Designated Contracting States:
**AT BE BG CH CY CZ DE DK EE ES FI GR IE IT LI
LU MC PT SE SI TR**
• **SCHLUMBERGER HOLDINGS LIMITED
Road Town,
Tortola (VG)**
Designated Contracting States:
**GB NL**

(72) Inventors:
• **Guibert, Karine
75007 Paris (FR)**
• **Loizzo, Matteo
20123 Milano (IT)**
• **Schoepf, Virginie
92120 Montrouge (FR)**

(74) Representative: **Weihs, Bruno Konrad et al
Osha Liang
121, Avenue des Champs Elysées
75008 Paris (FR)**

(56) References cited:
**US-A- 4 709 357        US-A- 4 805 156
US-A- 6 041 861**

## Description

### Background of the invention

The invention generally relates to an apparatus and method for acoustically investigating a tube casing.

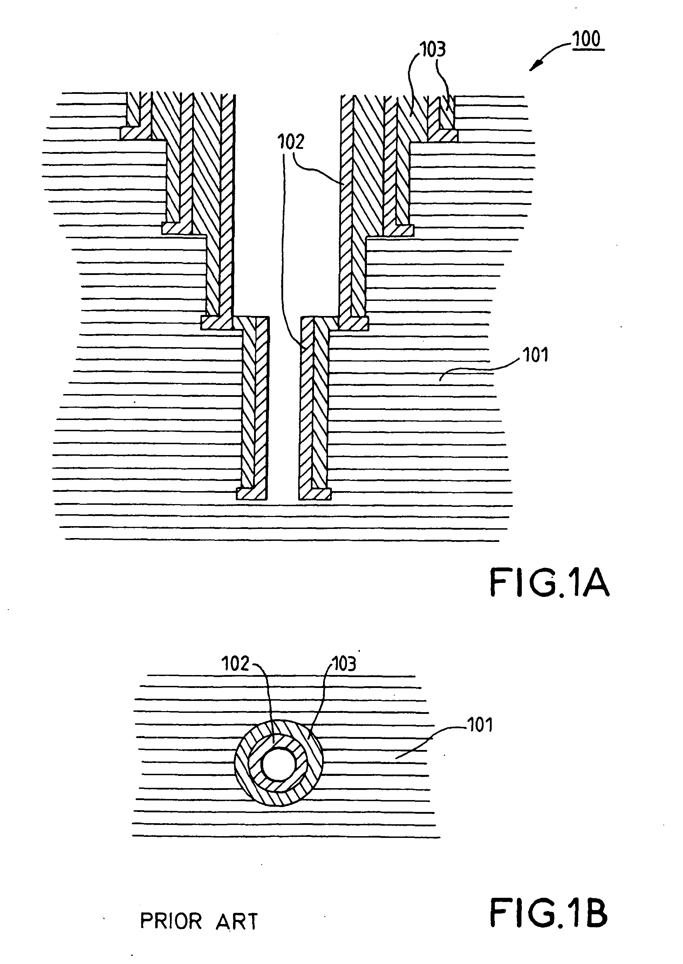

One example of a tube casing is a wall of a borehole penetrating an earth formation. Such a wall may comprise an annular space filed with set cement. After the cement has set in the annular space of the casing it is common practice to use acoustic non-destructive testing methods to evaluate its integrity. This evaluation is of prime importance since the cement must guarantee zonal isolation between different formations in order to avoid flow of fluids from the formations (water, gas, oil) through the annular space of the casing. Fig. 1A contains an example of a vertical cross section of a borehole 100 in a formation 101. The borehole comprises at least one tube 102 that may for example be made out of steel. A casing 103 surrounds the tube 102 and provides an annular space ideally filled with cement. Fig. 1B illustrates a horizontal cross section of the borehole 100.

A common cause for loss of isolation from the casing is the presence of a channel in the casing, i.e., an angular section of the annulus that is filled by a liquid instead of cement. Another cause for loss of isolation may be the presence of a microscopic annular space (microannulus) between le tube and the cement. In both cases a risk occurs that fluids flow along the cement casing and generate problems of fluid migration, or even worse a collapse of the borehole. It is therefore essential to be able to detect both causes, i.e., channel and microannulus, and remedy to their presence in the casing.

One possible way of remedy when a channel is detected in the casing, is to shoot a hole through the casing and to inject a cement slurry through the hole into the channel to seal the channel. This action is commonly referred to as "squeeze". A squeeze is expensive to perform.

Unfortunately it may in some cases of evaluation happen that a channel is detected although no channel is present in the casing, leading to a useless squeeze and unnecessary expenses. One reason for such a "false-positive" detection may be the presence of a microannulus.

Conventional detection and evaluation methods appear to be mislead by the presence of a microannulus and to deliver a value for the percentage of the annulus filled by cement that is lower than reality.

Such a detection method is described in the document with patent number US 6.041.861. In this method a predicted resonance response of the cement bond between the tube and the well is used as a reference value and compared with the mesured data. The method further consists in inverting a system of nine equations by use of a least square approximation technique.

### Summary of the invention

In a first aspect the invention provides a method for determining components of a tube casing surrounding a tube, using amplitude measurements of an acoustic signal wavefront emitted inside the tube. The acoustic signal wavefront is affected by the components of the tube casing while propagating in the tube. An attenuation $A(E)$ of the amplitude inside the tube is determined. A percentage of cement bonded $\phi_C$ in the tube casing, a percentage of cement de-debonded $\phi_D$ in the tube casing and a percentage of liquid $\phi_W$ in the tube casing, are determined by inverting the following equations :

$$\bullet \quad A(E) = \phi_C * A\left(E_{fc}\right) + \phi_W * A\left(E_{fp}\right) + \phi_D * A\left(E_{fd}\right)$$

$$\bullet \quad \log E_{P1} = \phi_C * \log E_{P1,fc} + \phi_W * \log E_{P1,fp} + \phi_D * \log E_{P1,fd}$$

$$\bullet \quad \phi_C + \phi_W + \phi_D = 1$$

wherein $E_{p1}$ is the amplitude measured at a location P1, $E_{P1,fp}$ is the amplitude at the location P1 for a free-pipe tube casing, $E_{P1,fc}$ is the amplitude at the location P1 for a fully cemented tube casing, $E_{P1,fd}$ is the amplitude at the location P1 for a fully de-bonded tube casing, and $A(E_{fp})$, $A(E_{fc})$, $A(E_{fd})$ being the attenuations of amplitude in case the tube casing is respectively free-pipe, fully cemented, and fully de-bonded.

In a second aspect the invention provides a method for determining components of a tube casing surrounding a tube, using amplitude measurements of an acoustic signal wavefront emitted inside the tube. The acoustic signal wavefront is affected by the components of the tube casing while propagating in the tube. A coupling Amplitude $E_o$ is determined by extrapolating amplitude measurements made at various locations in the tube to a location of a source of the acoustic signal. A percentage of cement bonded $\phi_C$ in the tube casing, a percentage of cement de-bonded $\phi_D$ in the tube casing and a percentage of liquid $\phi_W$ in the tube casing, are determined by inverting the following equations :

$$\log E_{P1} = \phi_C * \log E_{P1,fc} + \phi_W * \log E_{P1,fp} + \phi_D * \log E_{P1,fd}$$

$$\log E_0 = \phi_C * \log E_{0,fc} + \phi_W * \log E_{0,fp} + \phi_D * \log E_{0,fd}$$

$$\phi_C + \phi_W + \phi_D = 1$$

wherein $E_{P1}$ is the amplitude measured at a location P1, $E_{P1,fp}$ is the amplitude at the location P1 for a free-pipe tube casing, $E_{P1,fc}$ is the amplitude at the location P1 for a fully cemented tube casing, $E_{P1,fd}$ is the amplitude at the location P1 for a fully de-bonded tube casing, $E_{0,fp}$ is the coupling amplitude for a free-pipe tube casing, $E_{0,fc}$ is the coupling amplitude for a fully cemented tube casing, $E_{0,fd}$ is the coupling amplitude for a fully de-bonded tube casing.

In a third aspect the invention provides a method for determining components of a tube casing surrounding a tube, using amplitude measurements of an acoustic signal wavefront emitted inside the tube. The acoustic signal wavefront is affected by the components of the tube casing while propagating in the tube. An attenuation A(E) of the amplitude inside the tube, is determined and a coupling Amplitude $E_o$ is found by extrapolating amplitude measurements made at various locations in the tube to a location of a source of the acoustic signal. A percentage of cement bonded $\phi_C$ in the tube casing, a percentage of cement de-bonded $\phi_D$ in the tube casing and a percentage of liquid $\phi_W$ in the tube casing, are dertmined by inverting the following equations:

$$\log E_0 = \phi_C * \log E_{0,fc} + \phi_W * \log E_{0,fp} + \phi_D * \log E_{0,fd}$$

$$A(E) = \phi_C * A(E_{fc}) + \phi_W * A(E_{fp}) + \phi_D * A(E_{fd})$$

$$\phi_C + \phi_W + \phi_O = 1$$

wherein $A(E_{fp})$, $A(E_{fc})$, $A(E_{fd})$ correspond respectively to the attenuations of amplitude in case the tube casing is free-pipe, fully cemented, and fully debonded, and $E_{0,fp}$ is the coupling amplitude for a free pipe tube casing, $E_{0,fc}$ is the coupling amplitude for a fully cemented tube casing, $E_{0,fd}$ is the coupling amplitude for a fully de-bonded tube casing.

Preferably the coupling amplitude $E_o$ determined by defining a linear function $E(X) = A * X + E_o$ in which an amplitude $E(X)$ of an acoustic signal wavefront measured at a location X in the tube is subject to an attenuation A, and calculating $E(X) = E(0)$ for a location where X=0, corresponding to a source of the acoustic signal in the tube.

**Brief description of the Figures**

The invention will now be described in greater detail with reference to the accompanying drawings, in which :

Figure 1A contains a schematic vertical cross section of a borehole according to prior art,

Figure 1B contains a schematic horizontal cross section of a borehole according to prior art,

Figure 2A shows a schematic representation of a cement bond evaluating device according to prior art,

Figure 2B contains a representation of an acoustic path between a source and receivers of an acoustic signal,

Figure 3 illustrates an example of a measured amplitude signal,

Figure 4 illustrates an example of an annular space comprising cement and liquid, and

Figure 5 contains a flow chart illustrating an example embodiment of a method according to the invention.

**Description of the preferred embodiments**

Same references will be used to reference same elements in the Figures throughout the description.

**Measurement set-up**

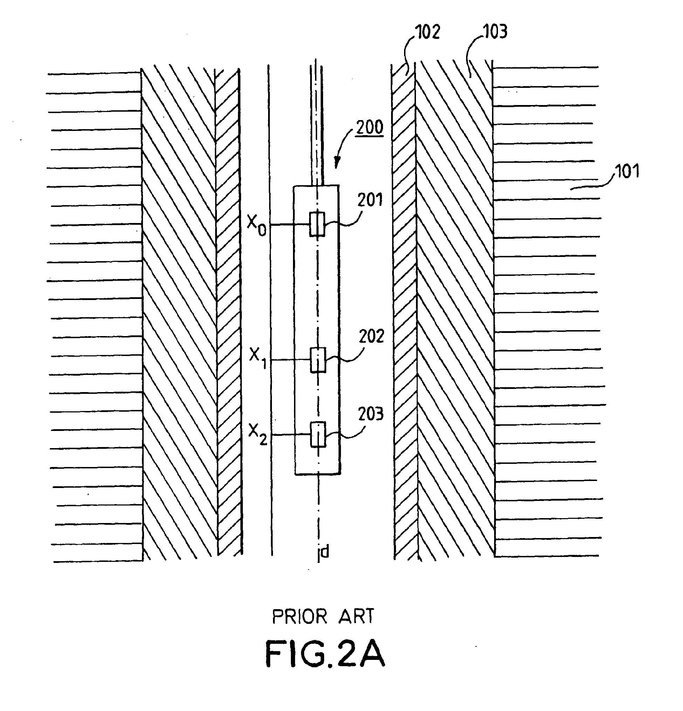

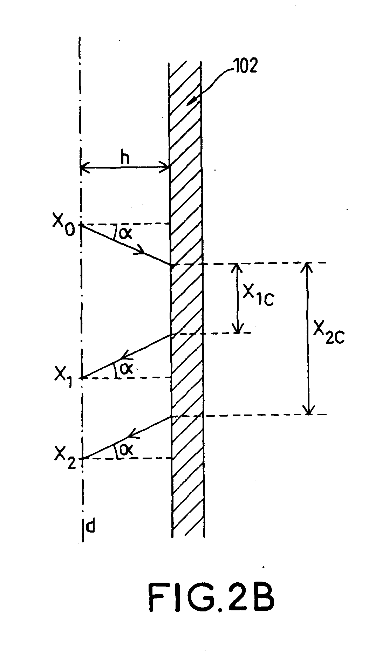

Fig.2 contains a schematic representation of a Cement Bond Evaluating Device 200 (CBED) inserted in a borehole delimited by the tube 102 and the casing 103, formed in the formation 101. The CBED 200 comprises an Acoustic Signal Source (ASS) 201, located at a first location $X_0$, and Acoustic Signal Receivers (ASR) 202 and 203 located respectively at a second location $X_1$ and a third location $X_2$.

As an example the ASS 201 may be a ceramic piezo-electrical transducer. The distances separating the ASS 201 from the ASR 202 and 203 may for example be respectively 90 cm and 150 cm. The ASS 201 emits acoustic pulses having a duration of 50 $\mu$s with a rate of 10 to 60 pulses per second. A typical main frequency of the acoustic signal may be 20 kHz. Other frequencies may be used in other examples.

Every pulse emitted by the ASS 201 generates a wavefront that propagates through the tube 102. After interacting with the tube 102 and the casing 103, the acoustic wave reaches the ASRs 202 and 203 where the time dependent amplitudes are measured. The measured amplitude is in fact the result of a composite wave that corresponds to an addition of waves that have travelled different paths (tube, casing...). The measured amplitude reflects an acoustic impedance and an acoustic coupling that exists between the tube and a content of the adjacent casing.

It is convenient to measure amplitudes of a determined peak as the determined peak may more easily be identified as it propagates with the wavefront from the ASR 202 to the ASR 203.

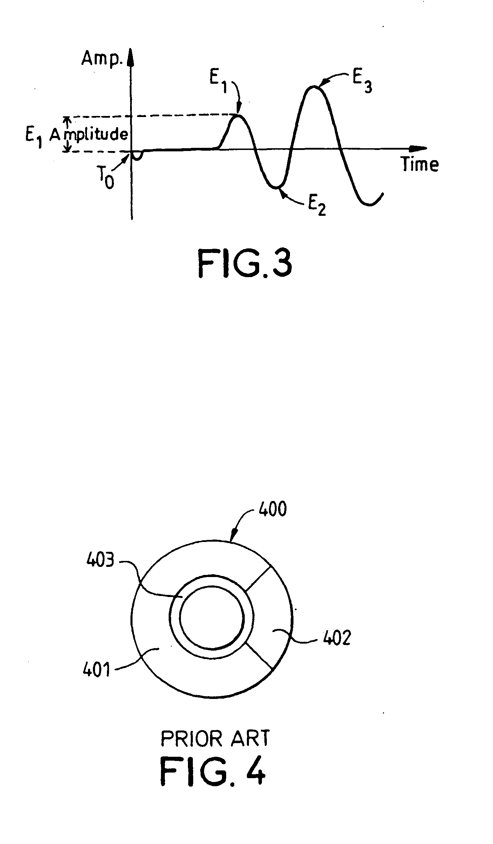

Fig. 3 shows an example curve of time dependent amplitude measurements that may for example be taken at the ASR 202. The curve goes through a number of peaks $E_1$, $E_2$, $E_3$... wherein $E_1$ appears to be the first peak after a transit time corresponding to time lapsed during propagation from the source to the ASR 202.

**Attenuation of amplitude**

An attenuation of the amplitude of the acoustic signal during propagation of the wavefront through the tube in longitudinal direction may be determined by evaluating measurements taken with two separate ASRs.

For example we may consider two ASRs, the first of which is 2.4 ft (0.73152 m) away from the source, the second of which is 3.4 ft (1.03632 m) away from the source, and calculate the attenuation as follows :

$$A = \frac{-20}{L} \log_{10} \frac{E1_1}{E1_2}$$

wherein :

$A$ is the attenuation factor in dB/ft,
$E1_1$ is the amplitude of the $E_1$ peak at the first ASR (2.4 ft),
$E1_2$ is the amplitude of the $E_1$ peak at the second ASR (3.4 ft),
$L$ is the distance between the first ASR and the second ASR.

**Interpretation of measured acoustic amplitudes**

It has previously been stated that the measured amplitude reflects an acoustic impedance and an acoustic coupling that exists between the tube and a content of the adjacent casing. The following discussion will be based on consideration of the peak E1, as an example. It is understood that any other peak or energy computed inside a temporal window taken from the curve of amplitude measurement may be considered instead as appropriate.

There are generally 3 extreme cases that may occur :

- The annulus is totally filled with water. This case is known as free-pipe (fp). In this case the peak $E_1$ is subject to a relatively small attenuation. A tube's vibration resulting from the acoustic signal will propagate with a minimum loss of intensity.
- The annulus is entirely cemented. This case is known as fully cemented (fc). In this case the peak $E_1$ is subject to a relatively strong attenuation.
- The annulus is entirely cemented except for a microscopic interval between the cement and the periphery of the tube. This case is known as fully de-bonded (fd). The attenuation has a value comprised between the values known from the previous cases, i.e. free-pipe and fully cemented.

Various methods exist in prior art to establish a quantitative evaluation of the components present in the casing.

One example method described in ***Grosmangin et al., A Sonic Method for Analysing the quality of Cementation of Borehole Casings, J. Pet. Tech, Trans., AIME, 222, Feb. 1961,*** allows to evaluate a percentage of cement in the casing by making use of a parameter called Bond Index (BI) as follows :

$$BI = \frac{\log(E1_{measured}) - \log(E1_{fp})}{\log(E1_{fc}) - \log(E1_{fp})}$$

wherein :

$E1_{measured}$ is the measured amplitude,
$E1_{fp}$ is the value of the amplitude in the free pipe case, and
$E1_{fc}$ is the value of the amplitude in the fully cemented case.

The BI is mainly adapted to determine a percentage of cement bonded in the tube casing ($\varphi_C$) and a percentage of liquid in the tube casing ($\varphi_W$). An example of such a situation is shown in

Fig. 4, in which a schematic cross section of a casing 400 surrounding a tube 403, containing a percentage of cement 401 and a percentage of liquid 402 is shown.

The BI may however be subject to false interpretation when in presence of a microannulus. A percentage of the microannulus in the casing is referenced as $\varphi_D$.

Another example method described in ***Leslie H.D., Selliers J. de, Pittman D.J.,*** *Coupling and Attenuation : A New Measurement Pair in Cement Bond Logging, SPE 16207, 1984,* makes use of a Coupling Amplitude (CA) to take into account the effect of a microannulus on the measured amplitude. In this example, the amplitude equals a value of the amplitude for an effective spacing equal to zero, wherein the effective spacing is the source-receiver distance where the curve of fully bonded cement intersects the curve of fully debonded cement in the plot peak amplitude/source-receiver spacing. Also, a Cement Index (CI) is defined in addition to the Bond Index. The CI allows to determine the percentage of cement $\varphi_C$ in the casing even if the cement is separated from the tube by a microannulus.

In the further description of embodiments of the present invention, the Coupling Amplitude is defined as being a value $E_0$ of the amplitude at a location of the tube corresponding to the source of the acoustic signal. The value $E_0$ of the Coupling Amplitude may be obtained by considering a linear function representing a value of the amplitude as a function of a distance to the source of acoustic signal. The value of the linear function at a zero distance is the value $E_0$ of the Coupling Amplitude.

Considering for example two measurements $E1_{X1}$ and $E1_{X2}$ of the amplitude of the peak E1 made at locations X1 and X2, we have following equations defining a linear function E(X), wherein A represents the attenuation of the amplitude :

$$\mathrm{E}(X1) = E1_{X1} = A * X1C + E_0 \qquad (1)$$

$$\mathrm{E}(X2) = E1_{X2} = A * X2C + E_0 \qquad (2)$$

wherein X1C and X2C are corrected values of X1 and X2 corresponding to the distance between receiver and source minus a path that is the sum of an acoustic path between source and casing and an acoustic path between casing and receiver, according to Snell's law and as illustrated in Fig. 2B. Accordingly X1C and X2C are expressed as follows :

$$X1C = X1 - 2 * h * \tan(\alpha)$$

$$X2C = X2 - 2 * h * \tan(\alpha).$$

The parameter h corresponds to an orthogonal distance between the Cement Bond Evaluating Device and the casing, also known as the standoff of the tool. The angle $\alpha$ may be obtained as follows :

$$\alpha = \mathrm{asin}(vfluid / vcasing)$$

wherein vfluid and vcasing are known acoustic velocities of fluid surrounding the Cement Bond Evaluating Device and of the casing.

$E_0$ is thus obtained by resolving equations (1) and (2) as follows :

$$E_0 = \frac{X2C * E1_{X1} - X1C * E1_{X2}}{X2C - X1C}$$

According to measurement results obtained in the frame of the present invention it was found that the respective percentages $\phi_C$, $\phi_W$ and $\phi_D$ may be related in the following 4 equations (3), (4), (5) and (6), involving measured and calculated values of the attenuation A(E) of an acoustic signal and the coupling amplitude $E_0$ for this signal :

$$(3) \qquad A(E) = \phi_C * A(E_{fc}) + \phi_W * A(E_{fp}) + \phi_D * A(E_{fd})$$

$$(4) \qquad \log E_{P1} = \phi_C * \log E_{P1,fc} + \phi_W * \log E_{P1,fp} + \phi_D * \log E_{P1,fd}$$

$$(5) \qquad \log E_0 = \phi_C * \log E_{0,fc} + \phi_W * \log E_{0,fp} + \phi_D * \log E_{0,fd}$$

$$(6) \qquad \phi_C + \phi_W + \phi_D = 1$$

In equation (3), $A(E_{fc})$, $A(E_{fp})$ and $A(E_{fd})$ are attenuations of the amplitude in extreme cases corresponding respectively to the fully cemented, the free-pipe and the fully de-bonded cases.

In equation (4), $E_{P1}$ is the amplitude of the acoustic signal measured at a location P1. $E_{P1,fc}$, $E_{P1,fp}$ and $E_{P1,fd}$ are amplitudes of the acoustic signal at the location P1 in extreme cases corresponding respectively to the fully cemented, the free-pipe and the fully de-bonded cases.

In equation (5), $E_{0,fc}$, $E_{0,fp}$ and $E_{0,fd}$ are coupling amplitudes in extreme cases corresponding respectively to the fully cemented, the free-pipe and the fully de-bonded cases.

Equation (6) reflects that the sum of all percentages should be 100 %.

Hence it is possible to obtain the percentages $\phi_C$, $\phi_W$ and $\phi_D$ by inverting any combination of 3 equations from the 4 equations. For example the percentages may be obtained by inverting the following systems of equations :

(3), (5) and (6) ;

(4), (5) and (6) ;

(3), (4) and (6).

Hence it is possible, using the invention, to obtain the three percentages of cement, liquid and microannulus, based on values of the coupling amplitude and / or of the attenuation in the extreme situations of the fully cemented, free-pipe, and fully de-bonded cases.

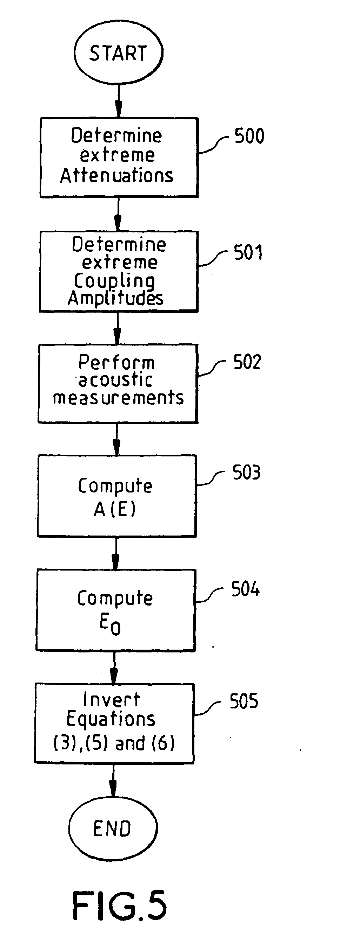

Figure 5 contains a flowchart illustrating an example of a method in which the system of equations (3), (5) and (6) is inverted.

In box 500 the attenuations for the extreme cases of free-pipe, fully cemented and fully de-bonded are determined. These attenuations have to be determined once only for a given set of borehole conditions defined by pressure and temperature and may be re-used each time when a new determining of components of the tube is made with the given set of borehole conditions, since these attenuations have constant values. These attenuations may for example be determined by means of measurements performed on a prepared tube outside of the borehole.

In box 501 coupling amplitudes for the extreme cases of free-pipe, fully cemented and fully de-bonded are determined. These coupling amplitudes have to be determined once only and may be re-used each time a new determining of components of the tube is made, since these coupling amplitudes have constant values. These coupling amplitudes may for example be determined by means of measurements performed on a prepared tube outside of the borehole.

In box 502 acoustic measurements are performed to determine components of the tube casing inside the borehole. These measurements are used to compute the attenuation A(E) in box 503 and the coupling amplitude $E_o$ in box 504.

At this point we have obtained the parameters for equations (3), (5) and (6). The equations are inverted in box 505 using well-known solving algorithms and as a result values for the percentages $\phi_C, \phi_W, \phi_D$ are obtained.

**Notations used throughout the description**

$E_0$      *Coupling Amplitude at a location of an acoustic signal emitter location*

$\phi_C$      *Percentage of cement bonded in tube casing*

$\phi_D$      *Percentage of cement de-bonded in tube casing*

$\phi_W$      *Percentage of liquid in tube casing*

BI      *Bond Index*

$E_{fp}$      *Free-pipe Amplitude*

$E_{fc}$      *Fully cemented Amplitude*

$E_{fd}$      *Fully de-bonded Amplitude*

$A(E)$      *Attenuation of Amplitude E*

CI      Cement Index

ASS      *Acoustic Signal Source*

ASR      *Acoustic Signal Receiver*

**Claims**

1. A method for determining components of a tube casing surrounding a tube, using amplitude measurements of an acoustic signal wavefront emitted inside the tube, the acoustic signal wavefront being affected by the components of the tube casing while propagating in the tube the method comprising

 • Determining an attenuation A(E) of the amplitude inside the tube,

 • Determining a percentage of cement bonded $\phi_C$ in the tube casing, a percentage of cement de-bonded $\phi_D$, in the tube casing and a percentage of liquid $\phi_W$ in the tube casing, by inverting the following equations :

$$\blacksquare \quad A(E) = \phi_C * A\left(E_{fc}\right) + \phi_W * A\left(E_{fp}\right) + \phi_D * A\left(E_{fd}\right)$$

$$\blacksquare \quad \log E_{P1} = \phi_C * \log E_{P1,fc} + \phi_W * \log E_{P1,fp} + \phi_D * \log E_{P1,fd}$$

$$\blacksquare \quad \phi_C + \phi_W + \phi_D = 1$$

wherein $E_{P1}$ is the amplitude measured at a location P1, $E_{P1, fP}$ is the amplitude at the location P1 for a free-pipe tube casing, $E_{P1,fc}$ is the amplitude at the location P1 for a fully cemented tube casing, $E_{P1, fd}$ is the amplitude at the location P1 for a fully de-bonded tube casing, and $A(E_{fp})$, $A(E_{fc})$, $A(E_{fd})$ being the attenuations of amplitude in case the tube casing is respectively free-pipe, fully cemented, and fully de-bonded.

**2.** A method for determining components of a tube casing surrounding a tube, using amplitude measurements of an acoustic signal wavefront emitted inside the tube, the acoustic signal wavefront being affected by the components of the tube casing while propagating in the tube, the method comprising

• Determining a coupling Amplitude $E_o$ by extrapolating amplitude measurements made at various locations in the tube to a location of a source of the acoustic signal,
• Determining a percentage of cement bonded $\phi_C$ in the tube casing, a percentage of cement de-bonded $\phi_D$ in the tube casing and a percentage of liquid $\phi_W$ in the tube casing, by inverting the following equations :

$$\blacksquare \quad \log E_{P1} = \phi_C * \log E_{P1,fc} + \phi_W * \log E_{P1,fp} + \phi_D * \log E_{P1,fd}$$

$$\blacksquare \quad \log E_0 = \phi_C * \log E_{0,fc} + \phi_W * \log E_{0,fp} + \phi_D * \log E_{0,fd}$$

$$\blacksquare \quad \phi_C + \phi_W + \phi_D = 1$$

wherein $E_{P1}$ is the amplitude measured at a location P1, $E_{P1,fp}$ is the amplitude at the location P1 for a free-pipe tube casing, $E_{P1,fc}$ is the amplitude at the location P1 for a fully cemented tube casing, $E_{P1,fd}$ is the amplitude at the location P1 for a fully de-bonded tube casing, $E_{0,fp}$ is the coupling amplitude for a free-pipe tube casing, $E_{0,fc}$ is the coupling amplitude for a fully cemented tube casing, $E_{0,fd}$ is the coupling amplitude for a fully de-bonded tube casing.

**3.** A method for determining components of a tube casing surrounding a tube, using amplitude measurements of an acoustic signal wavefront emitted inside the tube, the acoustic signal wavefront being affected by the components of the tube casing while propagating in the tube, the method comprising

• Determining an attenuation A(E) of the amplitude inside the tube,
• Determining a coupling Amplitude $E_o$ by extrapolating amplitude measurements made at various locations in the tube to a location of a source of the acoustic signal,
• Determining a percentage of cement bonded $\phi_C$ in the tube casing, a percentage of cement de-bonded $\phi_D$ in the tube casing and a percentage of liquid $\phi_W$ in the tube casing, by inverting the following equations :

$$\blacksquare \quad \log E_0 = \phi_C * \log E_{0,fc} + \phi_W * \log E_{0,fp} + \phi_D * \log E_{0,fd}$$

$$\blacksquare \quad A(E) = \phi_C * A\left(E_{fc}\right) + \phi_W * A\left(E_{fp}\right) + \phi_D * A\left(E_{fd}\right)$$

$$\blacksquare \quad \phi_C + \phi_W + \phi_O = 1$$

wherein $A(E_{fp})$, $A(E_{fc})$, $A(E_{fd})$ correspond respectively to the attenuations of amplitude in case the tube casing is free-pipe, fully cemented, and fully debonded, and $E_{0,fp}$ is the coupling amplitude for a free pipe tube casing, $E_{0,\,fc}$ is the coupling amplitude for a fully cemented tube casing, $E_{0,fd}$ is the coupling amplitude for a fully de-bonded tube casing.

**4.** The method according to anyone of claims 2 to 3, wherein determining the coupling amplitude $E_o$ further comprises

• Defining a linear function $E(X) = A * X + E_0$ in which an amplitude $E(X)$ of an acoustic signal wavefront measured at a location X in the tube is subject to an attenuation A, and
• Calculating $E(X) = E(0)$ for a location where X=0, corresponding to a source of the acoustic signal in the tube.

**Patentansprüche**

**1.** Verfahren zum Bestimmen von Komponenten eines ein Rohr umgebenden Futterrohrs unter Verwendung von Amplitudenmessungen einer Schallsignal-Wellenfront, die im Rohr ausgesendet wird, wobei die Schallsignal-Wellenfront durch die Komponenten des Futterrohrs beeinflusst wird, wenn sie sich in dem Rohr ausbreitet, wobei das Verfahren umfasst:

• Bestimmen einer Dämpfung A(E) der Amplitude in dem Rohr,
• Bestimmen eines Prozentsatzes $\phi_C$ von haftenden Zement in dem Futterrohr, eines Prozentsatzes $\phi_D$ von nicht haftendem Zement in dem Futterrohr und eines Prozentsatzes $\phi_W$ von Flüssigkeit in dem Futterrohr durch Invertieren der folgenden Gleichungen:

$$\bullet \quad A(E) = \phi_C * A(E_{fc}) + \phi_W * A(E_{fp}) + \phi_D * A(E_{fd})$$

$$\bullet \quad \log E_{P1} = \phi_C * \log E_{P1,fc} + \phi_W * \log E_{P1,fp} + \phi_D * \log E_{P1,fd}$$

$$\bullet \quad \phi_C + \phi_W + \phi_D = 1$$

wobei $E_{P1}$ die am Ort P1 gemessene Amplitude ist, $E_{P1,fp}$ die Amplitude an dem Ort P1 für ein freies Futterrohr ist, $E_{P1,fc}$ die Amplitude am Ort P1 für ein vollständig zementiertes Futterrohr ist, $E_{P1,fd}$ die Amplitude am Ort P1 für ein vollkommen nicht haftendes Futterrohr ist und $A(E_{fp})$, $A(E_{fc})$, $A(E_{fd})$ die Dämpfungen der Amplitude in dem Fall sind, in dem das Futterrohr ein freies Rohr, ein vollständig zementiertes Rohr bzw. ein vollkommen nicht haftendes Rohr ist.

**2.** Verfahren zum Bestimmen von Komponenten eines ein Rohr umgebenden Futterrohrs unter Verwendung von Amplitudenmessungen einer Schallsignal-Wellenfront, die in dem Rohr ausgesendet wird, wobei die Schallsignal-Wellenfront durch die Komponenten des Futterrohrs beeinflusst wird, wenn sie sich in dem Rohr ausbreitet, wobei das Verfahren umfasst:

• Bestimmen einer Kopplungsamplitude $E_0$ durch Extrapolieren von Amplitudenmessungen, die an verschiedenen Orten im Rohr vorgenommen werden, auf einen Ort einer Quelle des Schallsignals,
• Bestimmen eines Prozentsatzes $\phi_C$ von haftendem Zement in dem Futterrohr, eines Prozentsatzes $\phi_D$ von nicht haftendem Zement in dem Futterrohr und eines Prozentsatzes $\phi_W$ von Flüssigkeit in dem Futterrohr durch Invertieren der folgenden Gleichungen:

$$\bullet \quad \log E_{P1} = \phi_C * \log E_{P1,fc} + \phi_W * \log E_{P1,fp} + \phi_D * \log E_{P1,fd}$$

$$\bullet \quad \log E_0 = \phi_C * \log E_{0,fc} + \phi_W * \log E_{0,fp} + \phi_D * \log E_{0,fd}$$

$$\bullet \quad \phi_C + \phi_W + \phi_D = 1$$

wobei $E_{P1}$ die am Ort P1 gemessene Amplitude ist, $E_{P1,fp}$ die Amplitude am Ort P1 für ein freies Futterrohr ist, $E_{P1,fc}$ die Amplitude am Ort P1 für ein vollständig zementiertes Futterrohr ist, $E_{P1,fd}$ die Amplitude am Ort P1 für ein vollkommen nicht haftendes Futterrohr ist, $E_{0,fp}$ die Kopplungsamplitude für ein freies Futterrohr ist, $E_{0,fc}$ die Kopplungsamplitude für ein vollständig zementiertes Futterrohr ist und $E_{0,fd}$ die Kopplungsamplitude für ein vollkommen nicht haftendes Futterrohr ist.

3. Verfahren zum Bestimmen von Komponenten eines ein Rohr umgebenden Futterrohrs unter Verwendung von Amplitudenmessungen einer Schallsignal-Wellenfront, die in dem Rohr ausgesendet wird, wobei die Schallsignal-Wellenfront durch die Komponenten des Futterrohrs beeinflusst wird, wenn sie sich in dem Rohr ausbreitet, wobei das Verfahren umfasst:

  • Bestimmen einer Dämpfung A(E) der Amplitude in dem Rohr,
  • Bestimmen einer Kopplungsamplitude $E_0$ durch Extrapolieren von Amplitudenmessungen, die an verschiedenen Orten in dem Rohr ausgeführt werden, auf einen Ort einer Quelle des Schallsignals,
  • Bestimmen eines Prozentsatzes $\phi_C$ von haftendem Zement in dem Futterrohr, eines Prozentsatzes $\phi_D$ von nicht haftendem Zement in dem Futterrohr und eines Prozentsatzes $\phi_W$ von Flüssigkeit in dem Futterrohr durch Invertieren der folgenden Gleichungen:

$$\bullet \quad \log E_0 = \phi_C * \log E_{0,fc} + \phi_W * \log E_{0,fp} + \phi_D * \log E_{0,fd}$$

$$\bullet \quad A(E) = \phi_C * A(E_{fc}) + \phi_W * A(E_{fp}) + \phi_D * A(E_{fd})$$

$$\bullet \quad \phi_C + \phi_W + \phi_0 = 1$$

wobei $A(E_{fp})$, $A(E_{fc})$, $A(E_{fd})$ den Dämpfungen der Amplitude in dem Fall entsprechen, in dem das Futterrohr ein freies Rohr bzw. ein vollständig zementiertes Rohr bzw. ein vollkommen nicht haftendes Rohr ist, und $E_{0,fp}$ die Kopplungsamplitude für ein freies Futterrohr ist, $E_{0,fc}$ die Kopplungsamplitude für ein vollständig zementiertes Futterrohr ist und $E_{0,fd}$ die Kopplungsamplitude für ein vollkommen nicht haftendes Futterrohr ist.

4. Verfahren nach einem der Ansprüche 2 bis 3, bei dem das Bestimmen der Kopplungsamplitude $E_0$ ferner umfasst:

  • Definieren einer linearen Funktion E(X) = A * X + $E_0$, worin eine Amplitude E(X) einer Schallsignal-Wellenfront, die an einem Ort X in dem Rohr gemessen wird, einer Dämpfung A unterliegt, und
  • Berechnen von E(X) = E(0) für einen Ort, für den X = 0 gilt und der einer Quelle des Schallsignals in dem Rohr entspricht.

**Revendications**

1. Procédé de détermination de composants d'un tubage de tuyau entourant un tuyau, utilisant des mesures d'amplitude d'un front d'onde de signal acoustique émis à l'intérieur du tube, le front d'onde de signal acoustique étant affecté par les composants du tubage de tuyau durant sa propagation dans le tube, le procédé comprenant

  • La détermination d'une atténuation A(E) de l'amplitude à l'intérieur du tube,
  • La détermination d'un pourcentage de ciment collé $\phi_C$ dans le tubage de tuyau, d'un pourcentage de ciment décollé $\phi_D$ dans le tubage de tuyau et d'un pourcentage de liquide $\phi_W$ dans le tubage de tuyau, en inversant les équations suivantes :

$$\bullet \quad A(E) = \phi_C * A(E_{fc}) + \phi_W * A(E_{fp}) + \phi_D * A(E_{fd})$$

$$\bullet \quad \log E_{P1} = \phi_C * \log E_{P1,fc} + \phi_W * \log E_{P1,fp} + \phi_D * \log E_{P1,fd}$$

$$\phi_C + \phi_W + \phi_D = 1$$

où $E_{P1}$ est l'amplitude mesurée à un point P1, $E_{p1,fp}$ est l'amplitude au point P1 pour un tubage de tuyau à tuyau libre, $E_{P1,fc}$ est l'amplitude au point P1 pour un tubage de tuyau complètement cimenté, $E_{p1,fd}$ est l'amplitude au point P1 pour un tubage de tuyau complètement décollé, et $A(E_{fp})$, $A(E_{fc})$, $A(E_{fd})$ étant les atténuations d'amplitude dans le cas où le tubage de tuyau est respectivement, à tuyau libre, complètement cimenté et complètement décollé.

**2.** Procédé de détermination de composants d'un tubage de tuyau entourant un tuyau, utilisant des mesures d'amplitude d'un front d'onde de signal acoustique émis à l'intérieur du tube, le front d'onde de signal acoustique étant affecté par les composants du tubage de tuyau durant sa propagation dans le tube, le procédé comprenant

  • La détermination d'une Amplitude de couplage $E_O$ en extrapolant des mesures d'amplitude effectuées en divers points dans le tuyau par rapport à une position d'une source du signal acoustique,
  • La détermination d'un pourcentage de ciment collé $\phi_C$ dans le tubage de tuyau, d'un pourcentage de ciment décollé $\phi_D$ dans le tubage de tuyau et d'un pourcentage de liquide $\phi_W$ dans le tubage de tuyau, en inversant les équations suivantes :

$$\log E_{P1} = \phi_C * \log E_{P1,fc} + \phi_W * \log E_{P1,fp} + \phi_D * \log E_{P1,fd}$$

$$\log E_0 = \phi_C * \log E_{0,fc} + \phi_W * \log E_{0,fp} + \phi_D * \log E_{0,fd}$$

$$\phi_C + \phi_W + \phi_D = 1$$

où $E_{P1}$ est l'amplitude mesurée à un point P1, $E_{P1,fp}$ est l'amplitude au point P1 pour un tubage de tuyau à tuyau libre, $E_{P1,fc}$ est l'amplitude au point P1 pour un tubage de tuyau complètement cimenté, $E_{P1,fd}$ est l'amplitude au point P1 pour un tubage de tuyau complètement décollé, et $E_{o,fp}$ est l'amplitude de couplage d'un tubage de tuyau à tuyau libre, $E_{o,fc}$ est l'amplitude de couplage pour un tubage de tuyau complètement cimenté, $E_{o,fd}$ est l'amplitude de couplage pour un le tubage de tuyau complètement décollé.

**3.** Procédé de détermination de composants d'un tubage de tuyau entourant un tuyau, utilisant des mesures d'amplitude d'un front d'onde de signal acoustique émis à l'intérieur du tube, le front d'onde de signal acoustique étant affecté par les composants du tubage de tuyau durant sa propagation dans le tube, le procédé comprenant

  • La détermination d'une atténuation A(E) de l'amplitude à l'intérieur du tube,
  • La détermination d'une Amplitude de couplage $E_O$ en extrapolant des mesures d'amplitude effectuées en divers points dans le tuyau par rapport à une position d'une source du signal acoustique,
  • La détermination d'un pourcentage de ciment collé $\phi_C$ dans le tubage de tuyau, d'un pourcentage de ciment décollé $\phi_D$ dans le tubage de tuyau et d'un pourcentage de liquide $\phi_W$ dans le tubage de tuyau, en inversant les équations suivantes :

$$\log E_0 = \phi_C * \log E_{0,fc} + \phi_W * \log E_{0,fp} + \phi_D * \log E_{0,fd}$$

$$A(E) = \phi_C * A(E_{fc}) + \phi_W * A(E_{fp}) + \phi_D * A(E_{fd})$$

$$\phi_C + \phi_W + \phi_O = 1$$

où $A(E_{fp})$, $A(E_{fc})$, $A(E_{fd})$ correspondent respectivement à l'atténuation d'amplitude dans le cas où le tubage de tuyau est à tuyau libre, complètement cimenté et complètement décollé, et $E_{0,fp}$ est l'amplitude de couplage d'un tubage de tuyau à tuyau libre, $E_{0,fc}$ est l'amplitude de couplage d'un tubage de tuyau complètement cimenté, $E_{0,fd}$ est l'amplitude de couplage d'un tubage de tuyau complètement décollé.

**4.** Procédé selon l'une quelconque des revendications 2 à 3, dans lequel la détermination de l'amplitude de couplage $E_o$ comprend en outre

• La définition d'une fonction linéaire $E(X) = A * X + E_o$, où une amplitude $E(X)$ d'un front d'onde de signal acoustique mesurée à un point X dans le tuyau est soumise à une atténuation A, et
• Le calcul $E(X) = E(0)$ pour un point où $X = 0$, correspondant à une source d'un signal acoustique dans le tube.

100

103

102

101

FIG.1A

102  103

101

PRIOR ART

FIG.1B

PRIOR ART

# FIG.2A

FIG.2B

FIG.3

PRIOR ART
FIG. 4

16

FIG.5